# FASCICULE DE BREVET EUROPEEN

(11) **EP 1 642 264 B1**
(45) Date de publication et mention de la délivrance du brevet: **07.10.2009**
(21) Numéro de dépôt: 04767631.7
(22) Date de dépôt: 08.07.2004
(51) Int. Cl.: G10L 15/08

(54) **RECONNAISSANCE VOCALE POUR LES LARGES VOCABULAIRES DYNAMIQUES**
SPRACHERKENNUNG FÜR GROSSE DYNAMISCHE VOKABULARE
VOICE RECOGNITION FOR LARGE DYNAMIC VOCABULARIES

(30) Priorité: 08.07.2003 FR 0308341
(43) Date de publication de la demande: 05.04.2006
(73) Titulaire: Telisma, 22300 Lannion (FR)
(72) Inventeur: COGNE, Laurent, F-35150 Boistrudan (FR); LE HUITOUZE, Serge, F-35340 Erce-Pres-Liffre (FR); SOUFFLET, Frédéric, F-35410 Saint-Aubain-Du-Pavail (FR)
(74) Mandataire: Breese, Pierre
(86) Numéro de dépôt international: PCT/FR2004/001799
(87) Numéro de publication internationale: WO 2005/006308

(56) Documents cités:
- WO-A-01/91107
- US-A- 5 677 988
- FISSORE L ET AL: "STRATEGIES FOR LEXICAL ACCESS TO VERY LARGE VOCABULARIES" SPEECH COMMUNICATION, ELSEVIER SCIENCE PUBLISHERS, AMSTERDAM, NL, vol. 7, no. 4, 1 décembre 1988 (1988-12-01), pages 355-366, XP000006170 ISSN: 0167-6393
- FISSORE L ET AL: "LEXICAL ACCESS TO LARGE VOCABULARIES FOR SPEECH RECOGNITION" IEEE TRANSACTIONS ON ACOUSTICS, SPEECH AND SIGNAL PROCESSING, IEEE INC. NEW YORK, US, vol. 37, no. 8, 1 août 1989 (1989-08-01), pages 1197-1212, XP000045947 ISSN: 0096-3518

## Description

La présente invention se rapporte au domaine de la reconnaissance vocale.

La présente invention se rapporte plus particulièrement au domaine des interfaces vocales. Elle présente l'avantage d'être utilisable indépendamment du contexte de l'application vocale particulière : système de reconnaissance de la parole pour serveur téléphonique, dictée vocale, système de commande et contrôle embarqué, indexation d'enregistrements...

Les logiciels commerciaux actuels de reconnaissance de la parole sont basés sur l'usage de réseaux de Markov cachés (HMM pour Hidden Markov Model en anglais) pour décrire le vocabulaire à reconnaître, et sur un décodage utilisant un algorithme de type Viterbi pour associer à chaque énoncé une phrase de ce vocabulaire.

Les réseaux markoviens en question utilisent le plus souvent des états à densité continue.

Le vocabulaire de l'application, qu'il soit à l'origine basé sur des grammaires ou sur des modèles de langage stochastiques, est compilé en un réseau d'états fini, avec un phonème de la langue utilisée à chaque transition du réseau. Le remplacement de chacun de ces phonèmes par un *réseau markovien élémentaire* qui représente ce phonème dans son contexte de coarticulation, produit finalement un grand réseau markovien sur lequel le décodage de Viterbi s'applique. Les réseaux élémentaires eux-mêmes ont été appris grâce à un corpus d'apprentissage et avec un algorithme d'apprentissage maintenant bien connu de type Baum-Welsh, par exemple.

Ces méthodes aujourd'hui classiques sont décrites par exemple dans l'ouvrage de référence de Rabiner, et l'usage de modèles de langage dans celui de F. Jelinek.

Par souci de complétude, nous allons néanmoins décrire à nouveau de manière simplifiée les différents composants d'un moteur de reconnaissance vocale actuel, dans un exemple particulier d'usage.

Un signal de parole est conceptuellement une suite de phonèmes continue ou interrompue par des pauses, des silences ou des bruits. Les propriétés acoustiques du signal de parole peuvent, au moins pour les voyelles, être considérées comme stables sur des durées de l'ordre de 30 ms. Un signal issu du téléphone, échantillonné à 8 kHz, va donc être segmenté en trames de 256 échantillons (32 ms), avec un recouvrement de 50 % pour assurer une certaine continuité. L'information phonétique est ensuite extraite de chacune de ces trames par le calcul, par exemple dans le cas d'implémentation décrit ici, des 8 premiers MFCCs (Mel Frequency Cepstral Coefficients, voir [Richard]), de l'énergie de la trame, et des dérivées premières et secondes de ces 9 grandeurs. Chaque trame est ainsi représentée, toujours dans cet exemple particulier, par un vecteur de dimension 27 appelé vecteur acoustique. En raison des variations inter- et intra-locuteur, des conditions d'enregistrement, etc. dans les signaux de parole, un phonème ne sera pas représenté par un point dans cet espace, mais par un nuage de points, autour d'une certaine moyenne avec un certain étalement. La distribution de chaque nuage définit la densité de probabilité d'apparition du phonème associé. Si cette extraction par MFCC est judicieuse, on doit obtenir dans cet espace un ensemble de classes relativement compactes et séparées les unes des autres, chacune correspondant à un phonème.

Après cette phase d'extraction acoustique, le signal de parole est donc décrit par une suite de vecteurs acoustiques, et le travail de reconnaissance consiste à déterminer quelle suite de phonèmes est, de la façon la plus probable, associée à cette suite de vecteurs acoustiques.

Conceptuellement donc, un signal de parole est une suite de phonèmes continue ou interrompue par des silences, des pauses ou du bruit. Le mot « zéro » par exemple est constitué des phonèmes [z], [e], [r], [o]. On pourrait imaginer un réseau de Markov gauche-droite à 4 états, chaque état étant associé à un de ces phonèmes, dans lequel on ne permettrait aucun saut au-dessus d'un état. Avec un modèle entraîné, on pourrait réaliser grâce à l'algorithme de Viterbi un « alignement » d'un nouvel enregistrement, c'est-à-dire déterminer le phonème associé à chacune des trames. Cependant à cause des phénomènes de coarticulation entre phonèmes (modification des caractéristiques acoustiques d'un phonème lors du changement de forme du conduit vocal entre deux sons stables), il est nécessaire d'associer plusieurs états à un même phonème, pour prendre en compte l'influence du contexte. On obtient ainsi des états contextuels d'entrée, des états dit « cibles », qui correspondent à la partie stable du phonème, mais qui peuvent dépendre elle-même des phénomènes de coarticulation, de telle sorte qu'il y a en général plusieurs cibles, et des états contextuels de sortie. Dans cet exemple particulier, on peut donc par exemple utiliser des réseaux markoviens élémentaires en forme de papillons pour modéliser les phonèmes élémentaires de la langue.

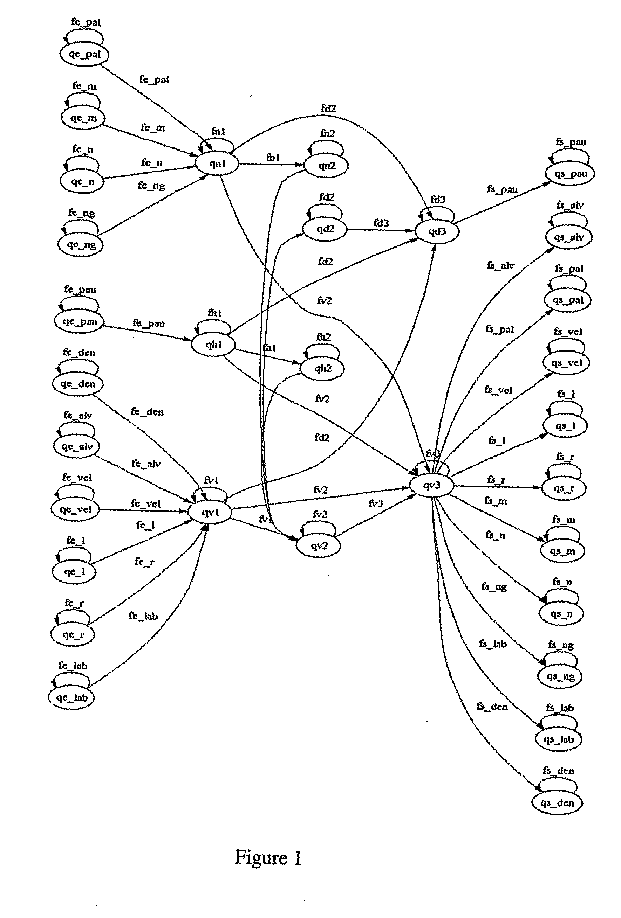

En reprenant l'exemple précédent, on aurait par exemple pour le phonème [e] un réseau tel qu'illustré Figure 1.

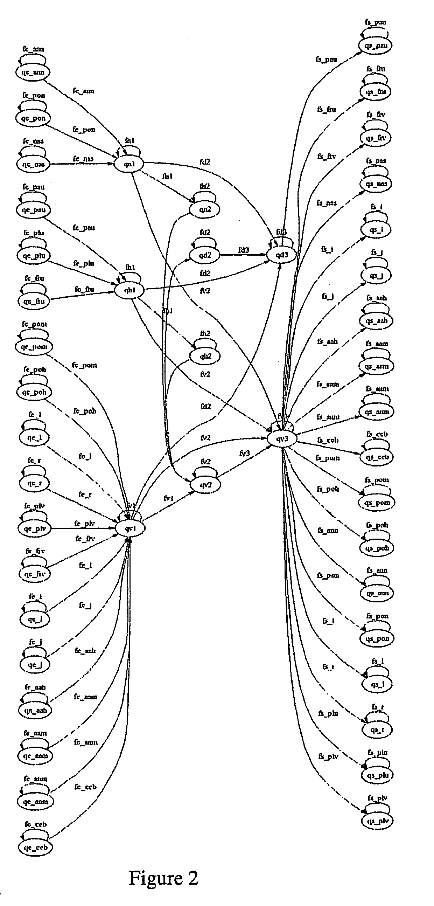

On aurait également par exemple pour le phonème [z] un réseau tel qu'illustré Figure 2.

De même, chacun des phonèmes utilisés pour décrire la langue en question est associé à ce type de réseau markovien, différent dans sa forme mais présentant toujours des entrées et sorties contextuelles dépendant des phénomènes de coarticulation.

Ces différents réseaux, qui correspondent chacun à un phonème de la langue, ont des densités de probabilités et des probabilités de transition qui sont déterminées par apprentissage sur un corpus de phrases enregistrées, avec l'usage d'un algorithme de type Baum-Welsh pour l'obtention des différents paramètres (voir Rabiner par exemple).

Le vocabulaire à reconnaître varie en fonction de l'application : ce peut être un nom, ou un numéro de téléphone, ou des requêtes plus compliquées, par exemple des phrases complètes pour une application de dictée. Il faut donc spécifier les mots à reconnaître, leur enchaînement, ou leur probabilité d'enchaînement, la syntaxe des phrases si elle peut être connue et décrite, pour utiliser cette connaissance supplémentaire, simplifier les réseaux de Markov et obtenir de bonnes performances en temps de calcul et en taux de reconnaissance.

C'est le rôle du modèle de langage de représenter cette connaissance.

Dans l'exemple à caractère d'illustration de l'état de l'art dans ce domaine, nous utiliserons des modèles de langage basés sur des grammaires probabilistes, plutôt que des modèles de langage stochastiques, comme ceux utilisés par exemple dans les systèmes de dictée.

Une grammaire toute simple est celle constituée par la syntaxe article-nom-verbe, avec pour article « le », pour nom « chien », et pour verbe « mange » ou « dort ». Le compilateur va transformer cette grammaire en un réseau de Markov, en mettant bout à bout les papillons des différents phonèmes, en éliminant les branches inutiles, et ce pour toutes les phrases compatibles avec la syntaxe. L'état initial est fixé par un papillon spécifique représentant le silence de début de phase. Il va être relié à l'entrée « pause » du papillon du phonème /l/. Seules les branches qui sont accessibles par transition à partir de cette entrée sont conservées, jusqu'à la sortie correspondant au phonème /∅/. Cette sortie et ensuite reliée à l'entrée du papillon du /∅/ correspondant au /l/. Puis par transition seules les branches utiles dans ce papillon sont conservées, et on continue ainsi jusqu'à épuisement des possibilités de la grammaire. Le réseau se termine nécessairement sur un papillon modélisant le silence de fin de phrase. Des branches du réseau peuvent être parallèles, si on a plusieurs possibilités de mots comme « mange » ou « dort », si on veut introduire une pause optionnelle entre deux mots, ou si plusieurs phonétisations sont possibles pour un même mot (par exemple « le » peut se prononcer [lø] ou [loe] suivant la région d'origine du locuteur).

De plus à la fin de chaque sous-réseau (un sous-réseau correspondant par exemple à un mot), on introduit une transition « vide », c'est-à-dire avec une probabilité de transition égale à 1, attachée à une « étiquette », qui est une chaîne de caractères donnant le mot représenté par ce sous-réseau (elle sera utilisée lors de la reconnaissance).

Le résultat de la compilation est un réseau complexe (d'autant plus que la grammaire est compliquée), optimisé pour la reconnaissance d'un certain type d'énoncé.

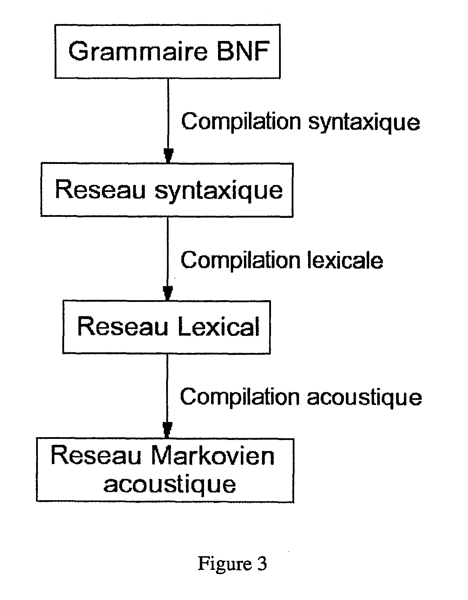

La construction du réseau markovien d'une application, dite compilation, comprend donc trois phases représentées Figure 3.

Pour illustrer ces phases, nous allons prendre un nouvel exemple simple basé sur une grammaire selon le format ABNF du W3C :
#ABNF 1.0 ISO-8859-1;
language fr;
root $main;
public $main = $BEGSIL (tête | jambe) $ENDSIL;

Cette grammaire permet simplement de décrire le modèle de langage qui permet de reconnaître le mot tête ou le mot jambe, de façon isolée, c'est-à-dire précédés et suivis d'un silence (et non pas de trouver une occurrence de ces mots dans des phrases plus complexes).

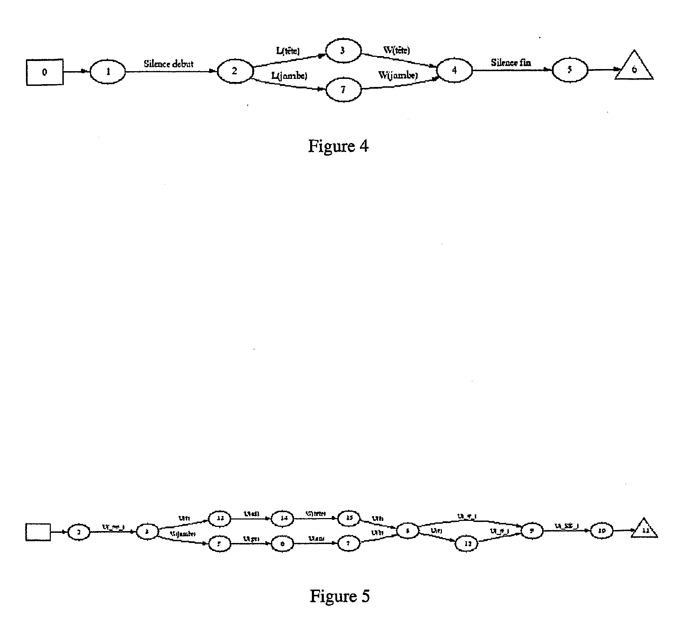

Lorsque cette grammaire est compilée au niveau syntaxique, on obtient le réseau de la Figure 4.

Les transitions marquées W sont des marqueurs de mots qui serviront seulement à retrouver après décodage, le mot effectivement prononcé. Les transitions marquées L signalent un mot effectif de la langue qui devra être phonétisé.

Puis la compilation lexicale, qui traduit la phonétisation des mots et l'introduction de cette phonétique dans le réseau, produit le réseau de la Figure 5.

Sur ce graphe comme sur les autres, les numéros des états n'ont pas d'importance. On retrouve encore les marqueurs de mots, qui sont situés dans le réseau de façon arbitraire tant qu'ils sont bien présents sur tous les parcours du graphe qui représente le mot associé, et pas sur les autres.

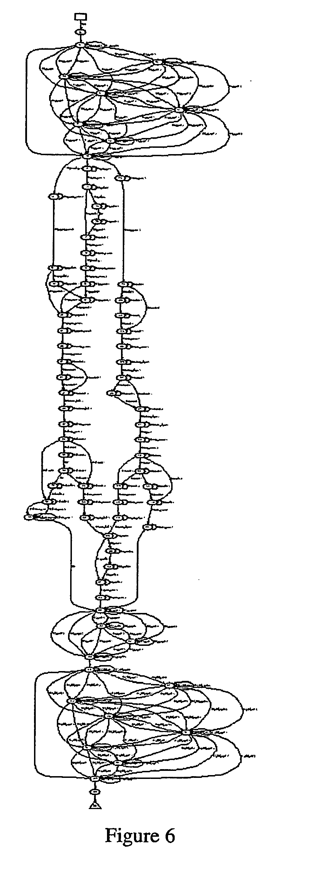

Et enfin, la compilation acoustique permet d'obtenir le réseau markovien final, par utilisation des réseaux acoustiques en lieu et place des phonèmes associés, application des conditions de raccordement contextuelles des modèles, et optimisation du réseau. Ce réseau markovien est représenté Figure 6.

Dans ce dernier graphe, les marqueurs de mots sont toujours présents, et même parfois dupliqués.

Ce dernier graphe est uniquement présenté pour montrer que sa complexité et le nombre d'états qu'il comporte, sont beaucoup plus grands que pour le niveau lexical. La compilation acoustique est de loin la phase la plus longue, produisant le réseau le plus gros.

Une fois le réseau markovien de l'application construit comme décrit ci-dessus, il est alors utilisé par le moteur de reconnaissance pour la compréhension (décodage) des phrases prononcées par l'utilisateur.

Dans un premier temps, comme il a été décrit plus haut, ce signal de parole est converti grâce à la phase d'extraction acoustique, en une suite de vecteurs acoustiques.

Il s'agit alors de déterminer quel parcours dans le réseau markovien de l'application, est le plus probablement associé à cette suite de vecteurs acoustiques, ou bien de décider que l'énoncé n'est pas une des phrases que l'application est construite pour reconnaître.

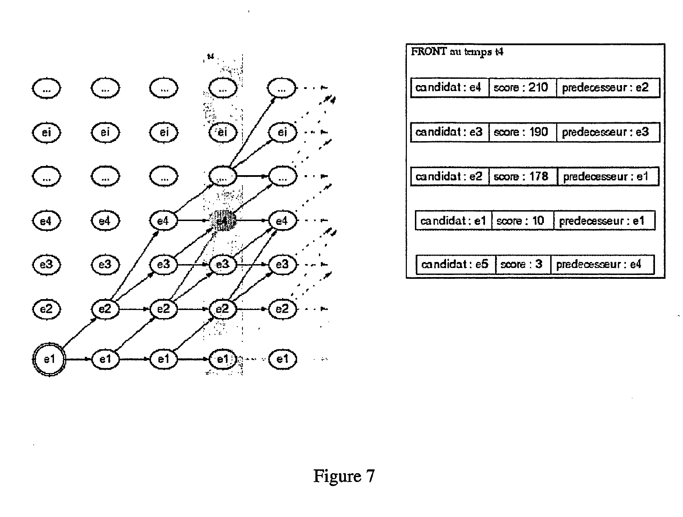

Ceci est effectué en utilisant l'algorithme de décodage de Viterbi, par exemple. Le principe du décodage est illustré Figure 7.

Sur l'axe des abscisses du schéma sont représentés, en temps discret, les différents vecteurs acoustiques qui arrivent régulièrement au moteur de reconnaissance (par exemple ici, toutes les 16 ms).

En ordonnée, sont représentés les différents états du réseau markovien de l'application, ainsi qu'ils ont été obtenus après la phase de compilation décrite plus haut, et qui utilisait à la fois la structure en papillon des phonèmes élémentaires de la langue, et la grammaire de l'application.

Ainsi, si l'on représente tous les états du réseau sur l'axe vertical, seules certaines transitions entre ces états sont possibles, avec une certaine probabilité, et au départ, on est forcément dans un des états associés au silence de départ, représenté en double cercle sur la figure.

On calcule alors, à chaque nouvelle trame, et en considérant toutes les transitions permises, le score du meilleur chemin amenant à tout état Ej.

Il y a alors un élagage, c'est-à-dire que l'on ne retient pour les développements associés aux prochaines trames, que les n meilleurs candidats, ou, selon certaines variantes de l'algorithme, que les états qui ont un score suffisamment proche du score du meilleur parcours (i.e. celui qui au temps Ti, obtient le score le plus élevé).

A titre d'exemple, on a représenté sur le schéma le front à l'instant t4, avec les scores des différents candidats. Si, par exemple, on avait choisi de limiter le front à 3 états, alors les hypothèses de développement du front représentées en vert n'auraient pas été explorées.

De la même manière, si l'on avait décidé de ne conserver que les candidats ayant un score au moins égal à 10% du score maximal, alors ces mêmes hypothèses n'auraient pas été explorées.

En réalité, on conserve généralement plusieurs centaines voire plusieurs milliers de candidats, selon la complexité de la grammaire.

Il faut remarquer que si la grammaire est complexe, il arrive fréquemment que seule une petite portion du réseau markovien est effectivement utilisée dans le décodage, le reste n'étant pas visité à cause de l'élagage lui-même, qui supprime les hypothèses très peu probables.

Lorsque toutes les trames de parole ont été consommées, on obtient alors, comme parcours le plus probable, le chemin de plus haut score obtenu par l'algorithme pour lequel l'état de sortie du réseau est atteint. On remonte alors la suite des états associés, du dernier au premier (backtracking en anglais), pour obtenir la phrase qui a vraisemblablement été prononcée, en utilisant les fronts conservés aux différents instants.

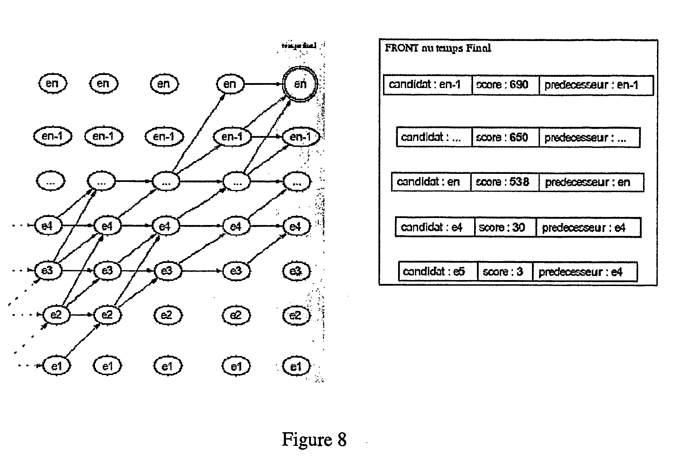

Ceci est illustré Figure 8.

Plutôt que de ne retenir que la suite d'états qui a obtenu le meilleur score, il est possible d'en conserver plusieurs, en prenant soin de ne prendre en considération que les suites qui sont effectivement associées à des énoncés différents (et non à des variantes d'un même énoncé, avec par exemple des alignements temporels différents ou bien avec des variantes de prononciation différentes).

Cette technique, dite de décodage Nbest, peut être utilisée pour obtenir les n meilleurs candidats, avec pour chacun, un score associé, ce score étant d'autant plus élevé que la phrase est plus probable.

Vis-à-vis du décodage de Viterbi, le décodage Nbest implique de conserver, dans le cas où plusieurs transitions aboutissent à un seul noeud, non pas le seul antécédent qui produit ce meilleur score, mais plusieurs antécédents et leur score associé.

Donc par exemple, s'il s'avère que le réseau final est en fait un arbre, c'est-à-dire si un noeud peut avoir plusieurs successeurs, mais qu'un noeud n'a toujours qu'un seul antécédent, alors la phrase effectivement prononcée peut être simplement déduite à partir du dernier noeud atteint, et il est alors possible de faire du décodage Nbest sans surcoût, juste en classant en fin de décodage les noeuds finaux par ordre de scores décroissant.

La reconnaissance vocale selon l'état de l'art que nous avons décrit, utilise un réseau de Markov caché qui est construit par compilation en trois phases : compilations syntaxique, lexicale puis acoustique, cette dernière phase étant de loin la plus longue et produisant le réseau le plus gros.

Le réseau obtenu est utilisé par un algorithme de décodage de Viterbi avec élagage, c'est-à-dire que seules les solutions qui semblent les plus prometteuses sont développées, et les autres abandonnées.

Par ce principe d'élagage, chaque reconnaissance utilise une sous-partie du réseau différente.

On connaît par ailleurs dans l'art antérieur, les procédés de reconnaissance vocale décrits dans le document US-A-5 667 988 ainsi que dans les documents dont l'auteur est Fissore L., et qui sont intitulés : - « Stratégies for lexical access to very large vocabularies », extrait du « Elsevier Science Publishers » du 01/12/1988, et
- « Lexical access to large vocabularies for speech recognition », extrait du « IEEE transactions on acoustics, speech and signal processing » du 01/08/1989.

Nous avons vu que les moteurs de reconnaissance de l'art antérieur utilisent pour le décodage un réseau compilé qui représente le vocabulaire actif, plus exactement l'ensemble des phrases que l'application peut reconnaître. Cette compilation est souvent un processus lent, même sur des machines puissantes, et le réseau compilé obtenu peut être assez encombrant en mémoire.

Ceci est surtout pénalisant pour les gros vocabulaires comme les listes de noms utilisées en assistance vocale pour les annuaires (plusieurs centaines de milliers de noms, voire plusieurs millions pour certaines grandes villes), et qui, de plus, sont dynamiques : il faut pouvoir rapidement construire la liste associée à une zone géographique dans une requête d'élargissement autour d'une ville donnée par exemple.

Comme on l'a vu dans la présentation de l'état de l'art, la reconnaissance vocale actuelle s'appuie sur un réseau de Markov qui est construit par étapes successives, la dernière étape, la plus consommatrice en temps, produisant finalement un réseau directement utilisable dans l'algorithme de décodage.

Le décodage lui-même est basé sur l'algorithme de Viterbi avec élagage, c'est-à-dire que seules les hypothèses de plus haut score sont conservées dans le développement temporel de la recherche des meilleurs candidats.

Lorsque le vocabulaire d'une application est grand, ou lorsque les grammaires sont complexes, donc que le réseau markovien de l'application comprend un très grand nombre d'états, il découle de l'élagage que seule une petite partie du réseau sera effectivement utilisée au cours d'un décodage donné, le reste étant représentatif de parties du vocabulaire ou de la grammaire phonétiquement très différentes de ce qui est effectivement prononcé.

Le principe de l'invention est de construire dynamiquement, pour chaque décodage, la petite partie du réseau utile, plutôt que, comme dans l'état de l'art, construire d'abord le réseau complet qui sera ensuite utilisé tel quel dans tous les décodages futurs.

Plus précisément, le principe de l'invention est de construire un arbre phonétique représentatif du vocabulaire de l'application. Ce graphe correspond en quelque sorte au résultat des premières étapes de compilation, jusqu'à la phase lexicale.

La production de ce graphe est extrêmement rapide, même pour de très grands vocabulaires de plusieurs centaines de milliers de mots.

Ce graphe est alors utilisé au cours de chaque décodage, pour permettre de construire la partie du réseau de Markov acoustique nécessaire selon l'élagage présent.

A cet effet, la présente invention concerne, dans son acception la plus générale, un procédé de reconnaissance vocale tel que revendiqué dans la revendication 1.

Avantageusement, des mots différents du vocabulaire mais présentant des segments phonétiques identiques en début de mot partageront, pour ces segments identiques, les mêmes branches de l'arbre phonétique.

Selon un mode de mise en oeuvre, lesdites unités phonétiques sont des phonèmes.

Selon un autre mode de mise en oeuvre, lesdites unités phonétiques sont des phonèmes en contexte.

La présente invention se rapporte également à un système de reconnaissance vocale tel que revendiqué dans la revendication 5 pour la mise en oeuvre du procédé comprenant au moins une mémoire et des moyens de calcul.

On comprendra mieux l'invention à l'aide de la description, faite ci-après à titre purement explicatif, d'un mode de réalisation de l'invention, en référence aux figures annexées :
- la figure 1 illustre un exemple de réseau de Markov correspondant à un phonème ;
- la figure 2 illustre un autre exemple de réseau de Markov correspondant à un phonème ;
- la figure 3 représente la construction du réseau markovien d'une application, dite compilation ;
- la figure 4 illustre un réseau obtenu lorsqu'une grammaire est compilée au niveau syntaxique ;
- la figure 5 illustre un réseau produit par la compilation lexicale, qui traduit la phonétisation des mots et l'introduction de cette phonétique dans le réseau ;
- la figure 6 représente un autre exemple de réseau markovien ;
- les figures 7 et 8 illustrent le principe du décodage ;
- la figure 9 illustre un exemple de graphe pour la mise en oeuvre du procédé selon l'invention ;
- la figure 10 illustre la forme d'un arbre ;
- la figure 11 illustre un réseau markovien représentant le phonème [m] ;
- la figure 12 illustre un réseau markovien extrait de celui de la figure 11 selon les contraintes de contexte ;
- les figures 13, 14, 15, 16, 17, 18, 20 et 21 représentent d'autres réseaux de Markov ; et
- la figure 19 illustre un arbre.

Dans un exemple particulier d'utilisation, l'invention est particulièrement adaptée à la reconnaissance vocale sur de très grandes listes de mots ou de noms, par exemple pour des applications d'annuaires vocaux.

La description de l'invention sera donc faite, de façon non limitative, pour ce type d'application.

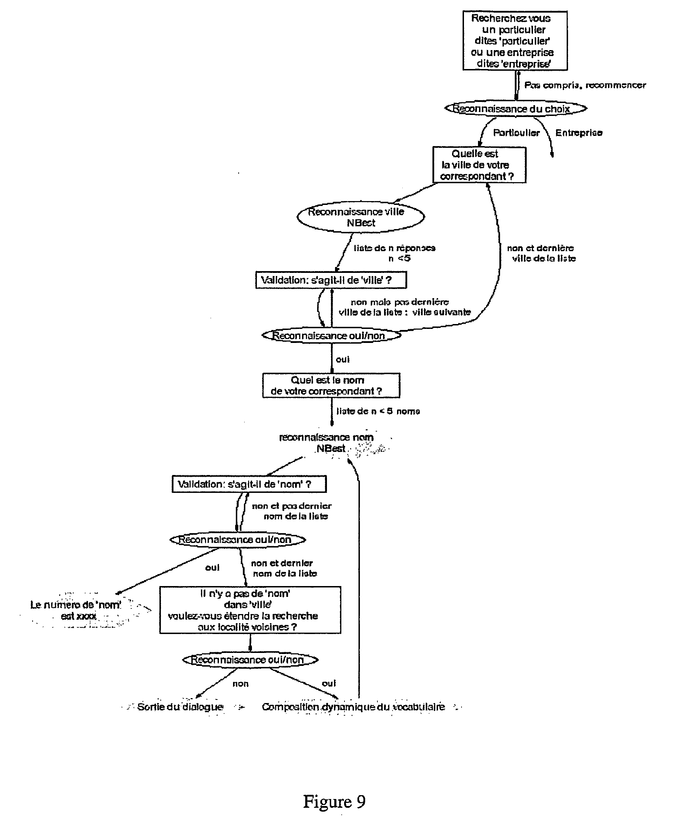

L'accès à l'annuaire se fait pour l'utilisateur au travers d'une suite de questions-réponses, dont un exemple est donné Figure 9.

Dans cette séquence de questions, certaines vont occasionner des réponses possibles pour un vocabulaire constitué par une longue liste de noms : par exemple « Reconnaissance Nom » pour une ville importante, si la liste des abonnés a été mise à jour. Cette liste doit d'autre part être élargie dans le cas où le dialogue mène à l'extension aux localités voisines, c'est-à-dire si la recherche doit être étendue à des villes proches de la ville initiale de recherche.

C'est principalement dans ces cas que la technologie actuelle de l'état de l'art est inutilisable, car la compilation du réseau markovien qu'elle nécessite est beaucoup trop lente.

On voit également sur ces graphes l'usage du décodage Nbest, qui permet d'énumérer les solutions possibles et de demander la validation par l'utilisateur.

Ces listes sont construites par interrogation d'une base de données, qui, pour chaque ville, donne les abonnés téléphoniques et la ou les phonétisations possibles de ces noms.

Nous allons décrire le fonctionnement détaillé de l'invention en utilisant une liste réduite de noms, afin de rendre clairs les développements, même s'il s'avère que l'intérêt de l'invention réside principalement dans son efficacité pour les grands vocabulaires.

Prenons les noms suivants, avec leur phonétisation :
- Morand: m . o . r . an
- Moraux: m . o . r . au
- Morazin: m . o . r . a . z . in
- Morel: m . o . r . ai . l . (e+())
- Morice: m . o . r . i . s . (e+())
- Morin: m . o . r . in

Dans l'invention proposée, cette liste n'est donc pas utilisée pour produire un réseau classique par compilation tel que décrit dans l'état de l'art présenté plus haut. Elle est au contraire transformée en un arbre phonétique déterministe.

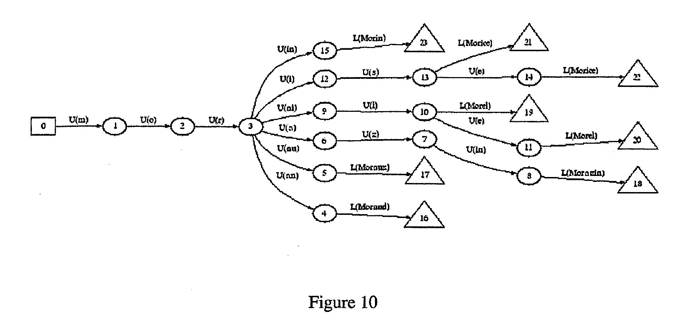

Pour les noms donnés ci-dessus, cet arbre prendra la forme telle qu'illustrée Figure 10.

Il faut noter que la création d'un tel graphe est extrêmement rapide, puisque sur une machine de calcul de Hewlett Packard de type Pentium 3 de 1GHz de fréquence d'horloge, il faut par exemple 0,4 seconde pour former l'arbre d'une ville de 60 000 habitants, alors que la compilation standard complète de cette même liste prend sur la même machine environ 8 minutes, ce qui est incompatible avec le temps d'attente d'une personne utilisatrice du service. C'est en effet la phase de construction du réseau markovien final qui est la plus longue.

L'arbre précédent est utilisé, selon la présente invention, dans le décodage de Viterbi préférentiellement de la manière suivante (des variantes seront présentées plus loin) :

Au démarrage du décodage, nous sommes dans l'état initial du graphe représenté par la boîte numérotée 0.

Ce graphe montre que le premier phonème est un [m], avec à gauche un silence de début de mot, puisque c'est le premier état, et à droite un unique phonème [o].

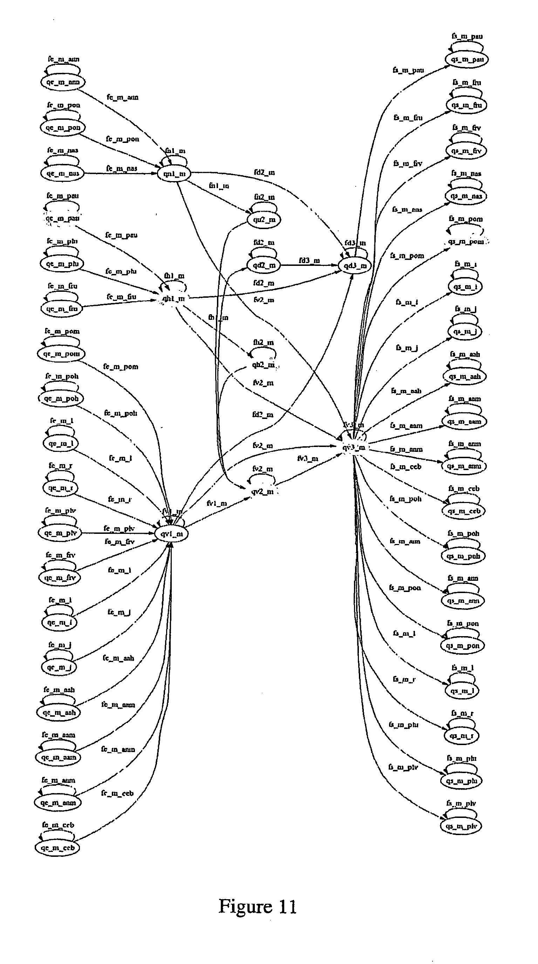

Si par exemple, dans le jeu des réseaux markoviens élémentaires utilisés, selon l'état de l'art, le phonème [m] est représenté par le réseau de la Figure 11.

Alors, puisque à gauche du phonème [m] on a seulement un silence, qui correspond à l'entrée qe_m_pau, et puisque à droite on a un seul phonème [o], qui correspond à la sortie qs_m_pom, alors seuls les états grisés du modèle élémentaire seront effectivement accessibles et utiles.

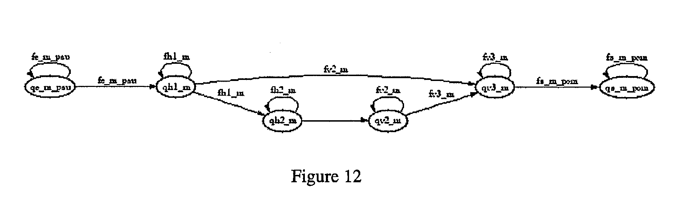

On composera donc le réseau illustré Figure 12 extrait du précédent selon les contraintes de contexte.

On commencera le décodage de Viterbi avec élagage sur ce réseau. Lorsqu'une des hypothèses développées dans le front atteindra l'état qs_m_pom, il faudra alors construire la suite du réseau dynamiquement pour poursuivre le décodage.

Pour cela on utilise l'arc phonétique pour trouver que le phonème suivant est un [o], pris entre le phonème [m] et le phonème [r].

La situation est identique :

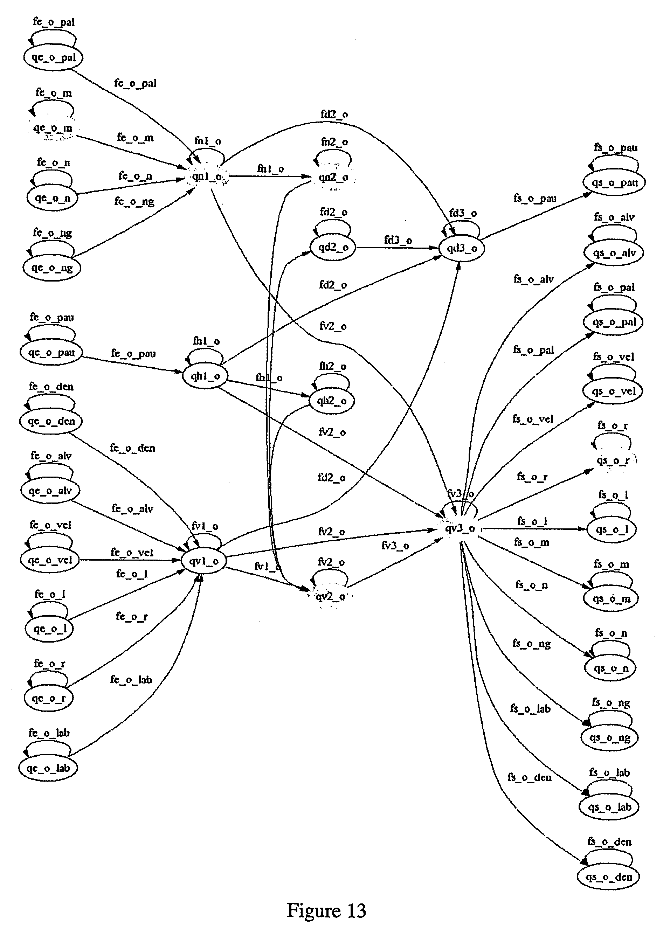

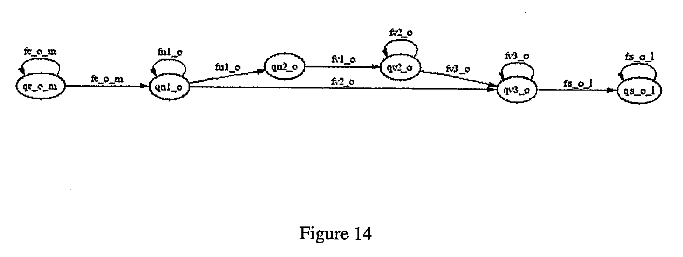

Si par exemple le phonème [o] est représenté par le réseau markovien de la Figure 13, alors la partie utile, représentée par les noeuds grisés sur le dessin, sera du fait des contextes, conforme à la Figure 14.

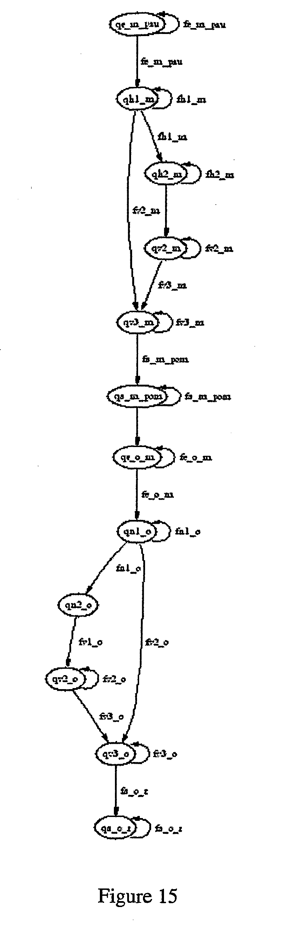

Et on obtiendra donc, à ce stade du décodage, le réseau dynamiquement construit de la Figure 15.

Encore une fois, lorsqu'une des hypothèses du décodage de Viterbi atteindra l'état final de ce réseau (noté ici qs_o_r), on utilisera l'arbre phonétique pour constater que le phonème suivant est un [r].

A ce stade, ce réseau construit dynamiquement est bien la sous-partie du réseau complet qui aurait été obtenu par une compilation traditionnelle. La seule différence est qu'il est construit à la demande, et non avant usage de manière complète et statique.

En d'autres termes, l'élagage n'a pas encore d'impact sur le développement du réseau qui réduirait effectivement les portions de réseau développées.

Nous allons voir maintenant ce point particulier dans notre exemple en poursuivant le décodage dans un contexte phonétique plus riche :

En effet, le [r] est cette fois présent dans un contexte phonétique plus riche, puisqu'on trouve à sa droite dans l'arbre les phonèmes [in], [i], [ai], [a], [au], [an].

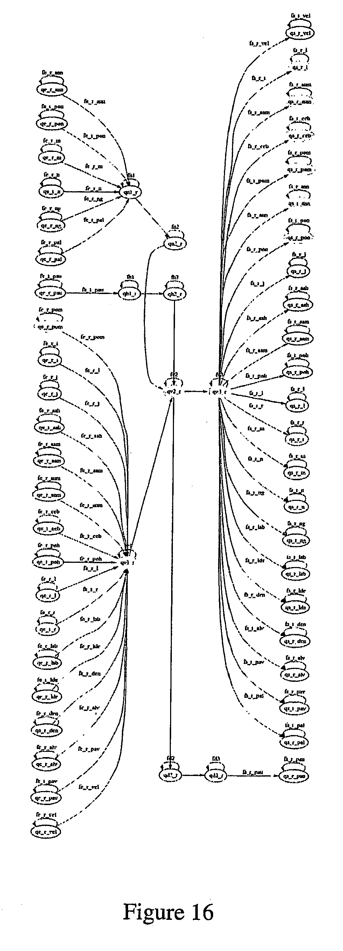

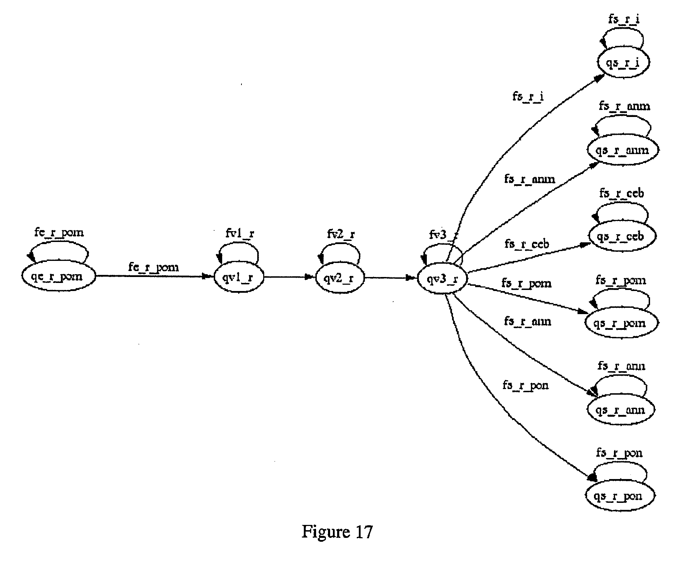

Si le [r] est représenté par le réseau de la Figure 16, alors la partie utile de ce contexte sera conforme à la Figure 17.

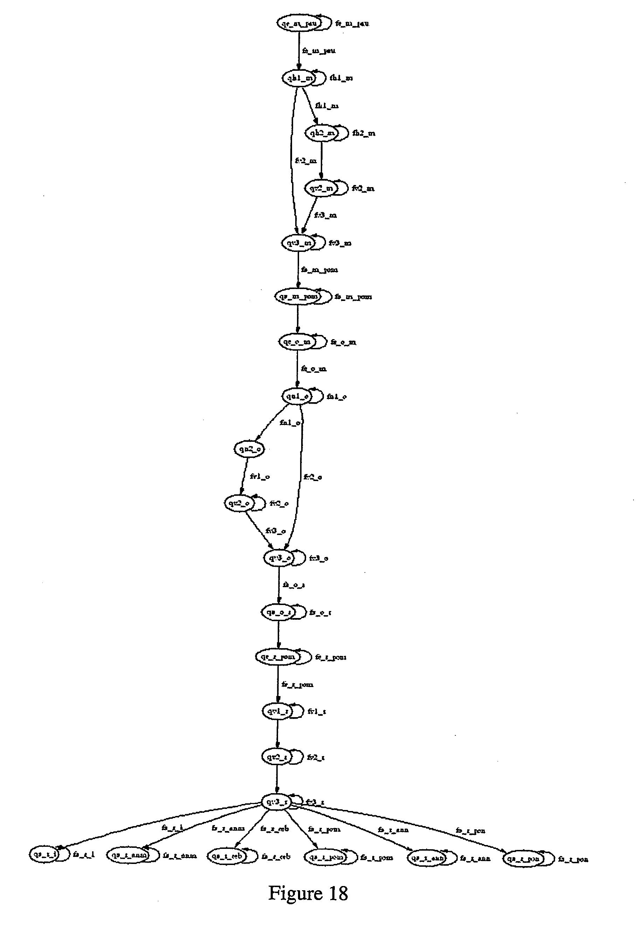

Et finalement, on arrivera à ce stade au réseau actif dynamiquement construit représenté sur la Figure 18.

Supposons donc que, au cours du décodage de Viterbi s'appuyant sur ce réseau, une des hypothèses amène à l'état de sortie qs_r_i (parce que l'utilisateur prononce effectivement Morice) avec un score tellement élevé que les autres hypothèses, arrivant dans les autres états de sortie, soient éliminées du front.

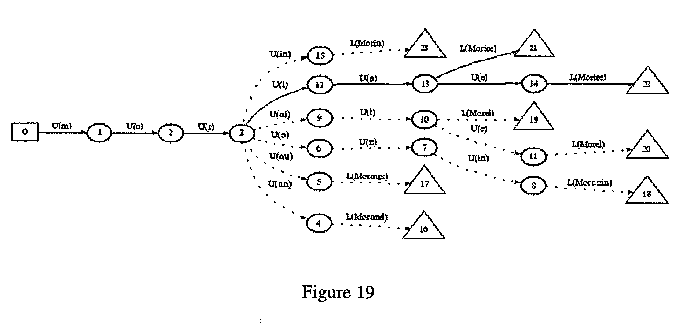

Alors au cours du développement dynamique suivant, seule la branche de l'arbre associée à cette hypothèse sera développée, les autres étant abandonnées. Tout se passe comme si le décodage se poursuivait sans les branches de l'arbre présentées en pointillés sur la Figure 19.

Ainsi cette fois, en conséquence de l'élagage, le réseau dynamiquement développé selon le principe de l'invention n'est plus l'image du réseau complet obtenu par compilation selon l'état de l'art : c'est un réseau plus petit.

L'exemple développé ici est simple par souci de clarté, mais dans des applications réelles, la partie du réseau effectivement développée est très faible comparée au réseau classique obtenu par compilation.

On peut donc dire que, selon l'état de l'art, le réseau markovien correspondant au vocabulaire de l'application est construit une fois pour toutes, et que pour chaque décodage, en raison de l'élagage mis en oeuvre au cours du décodage, seule une petite partie de ce réseau est effectivement utilisée.

Tandis que, selon le principe de l'invention, le réseau complet n'est jamais construit, mais la partie du réseau effectivement nécessaire pour une reconnaissance donnée est dynamiquement construite au cours du décodage.

Dans l'implémentation que nous avons présentée, la partie du réseau de Markov caché de l'application qui est nécessaire pour un décodage est construite dynamiquement, étape par étape, en découpant les réseaux markoviens élémentaires afin d'en extraire, selon les contextes d'apparition des phonèmes dans l'arbre de l'application, la sous-partie utile.

L'arbre phonétique de l'application joue dans ce processus un rôle central pour déterminer ces contextes, de même qu'il permet d'effectuer un décodage Nbest de manière efficace et simple, du fait même de sa structure d'arbre, par opposition à un graphe.

Il existe d'autres implémentations de l'invention proposée, qui conserve le rôle central de cet arbre pour les raisons décrites.

Nous allons décrire une de ces alternatives, de façon non exclusive d'autres variantes.

Supposons que nous ayons, pour une langue donnée, 40 réseaux markoviens élémentaires représentant les phonèmes utilisés dans cette langue pour phonétiser les mots. Ces réseaux, comme dans les quelques exemples donnés, ont des états d'entrée et de sortie pour représenter les contextes phonétiques, selon des règles strictes : par exemple un état qs_x_i ne peut être connecté qu'à un état qe_y_i, x et y étant deux réseaux élémentaires quelconques.

On peut construire alors un réseau global dans lequel les 40 sous-réseaux sont mis en parallèle, et de plus, toutes les sorties de chaque réseau sont connectées par des transitions vides à toutes les entrées de tous les réseaux qui lui sont compatibles selon les contextes phonétiques (c'est-à-dire qu'on a un réseau markovien correspondant à toutes les suites de phonèmes possibles).

Il est alors possible, au lieu de développer dynamiquement comme précédemment la partie utile du réseau, d'utiliser l'algorithme de Viterbi dans lequel les états manipulés sont des paires constituées d'un état du réseau complet formé comme décrit ci-dessus et d'un noeud de l'arbre phonétique.

Lorsqu'une hypothèse amène à un des états de sortie d'un papillon, alors on vérifie dans l'arbre phonétique qu'il y a bien des branches compatibles avec le contexte phonétique associé à cet état. Dans le cas contraire, on abandonne le développement de cette hypothèse, comme si elle était victime d'un élagage standard.

Cette méthode est fonctionnellement équivalente à la méthode proposée précédemment, mais elle est plus coûteuse en temps de calcul, puisque des hypothèses sont développées même s'il s'avère ultérieurement qu'elles conduisent à des contextes phonétiques qui ne sont pas présents dans l'arbre de l'application, et donc qu'elles seront de toute façon éliminées.

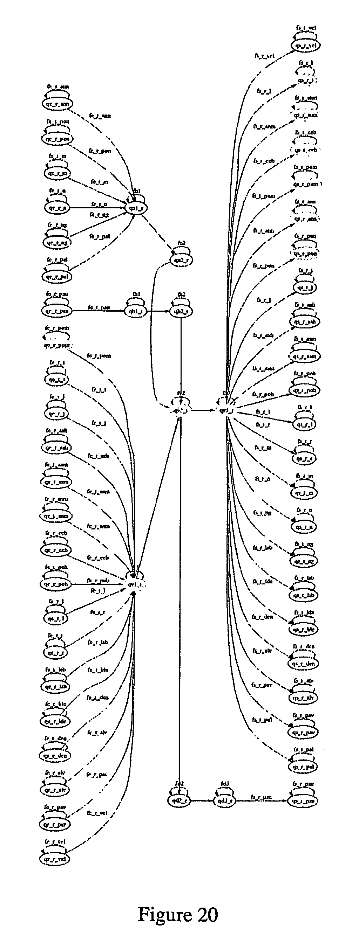

Pour illustrer ce point, on peut reprendre l'exemple du phonème [r] utilisé dans notre exemple précédent. En raison de la structure particulière de l'arbre de notre exemple, seuls les états grisés du modèle complet, et les transitions entre ces états, étaient finalement utiles. On se reportera à cet effet à la Figure 20.

Selon la description de la variante décrite ici, les autres transitions vers toutes les sorties non grisées seraient également développées, mais seraient ensuite abandonnées quand l'état de sortie serait atteint, puisqu'aucun des contextes associés à ces états n'est présent dans l'arbre de cette application simple.

Il est possible de remédier à ce surplus de travail en ajoutant des transitions vides nouvelles dans chacun des réseaux élémentaires utilisés, qui se comportent comme des portes, c'est-à-dire qui peuvent être ouvertes ou fermées.

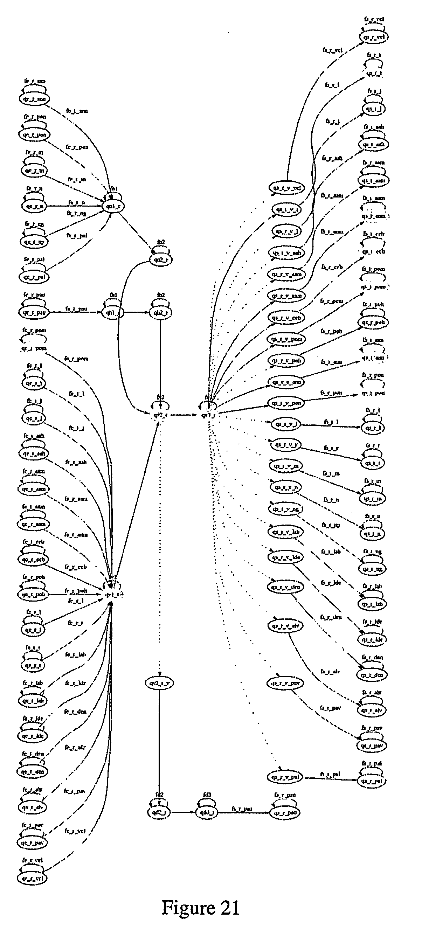

Dans le cas de l'exemple du réseau associé au phonème [r] ci-dessus, on aurait par exemple le réseau de la Figure 21.

Sur ce modèle, les transitions en pointillés montre des transitions de type porte « ouverte », du fait du contexte d'apparition du [r], qui fait que tous les états de sortie ne peuvent être atteints.

Pour les états de sortie activés, en grisé sur le schéma, les portes associées sont fermées, et sont représentées en traits pleins.

Dans le front de développement utilisé par l'algorithme de décodage de Viterbi avec élagage, il faut non seulement conserver, comme décrit plus haut, une référence à l'état du réseau associé à l'hypothèse que cet élément du front représente, mais aussi conserver dans des variables appropriées l'état des portes (ouvertes ou fermées) en tenant compte des contextes droits d'apparition du phonème dans l'arbre.

Par exemple, il est possible que dans un même front, deux références différentes au même phonème donc au même réseau soient présentes, mais dans des contextes phonétiques différents et donc avec des positionnements des portes différentes.

Cette variante est ainsi fonctionnellement équivalente à l'implémentation standard présentée. Elle nécessite néanmoins pour être aussi efficace, de rajouter ces transitions vides de type porte et de les contrôler pour chaque élément du front au cours du décodage en fonction des contextes rencontrés à droite de chaque phonème dans l'arbre phonétique.

Nous avons vu que l'arbre phonétique est central pour l'invention proposée, principalement pour permettre un décodage Nbest sans surcoût.

Bien sûr, il est possible de stocker cet arbre de manière plus compacte, par exemple en stockant un graphe équivalent à l'arbre dont les parties droites communes à plusieurs branches sont factorisées.

Par contre, cette forme compacte sera utilisée comme représentation de l'arbre lui-même de la manière standard décrite plus haut.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de reconnaissance vocale comportant une étape de représentation d'un vocabulaire traduit en un modèle de Markov, une étape de décodage par un algorithme de Viterbi et une étape d'élagage des solutions explorées,ledit vocabulaire est décrit sous forme d'un arbre composé d'arcs et de noeuds entre lesquels sont définies des transcriptions décrivant les unités phonétiques utilisées par le modèle de langage de l'application, **caractérisé en ce que** le réseau de Markov nécessaire au décodage de Viterbi est construit au moins en partie de manière dynamique grâce à des sous-unités Markoviennes déterminées à partir des transcriptions de l'arbre.

2. Procédé de reconnaissance vocale selon la revendication 1, **caractérisé en ce que** des mots différents du vocabulaire mais présentant des segments phonétiques identiques en début de mot partageront, pour ces segments identiques, les mêmes branches de l'arbre phonétique.

3. Procédé de reconnaissance vocale selon la revendication 1 ou 2, **caractérisé en ce que** lesdites unités phonétiques sont des phonèmes.

4. Procédé de reconnaissance vocale selon la revendication 1 ou 2, **caractérisé en ce que** lesdites unités phonétiques sont des phonèmes en contexte.

5. Système de reconnaissance vocale adapté pour la mise en oeuvre du procédé de reconnaissance vocale selon l'une quelconque des revendications précédentes et comprenant au moins une mémoire et des moyens de calcul.

## Claims

1. A voice recognition method including a step of representing a vocabulary translated into a Markov model, a step of decoding by a Viterbi algorithm and a step of pruning the scanned solutions, said vocabulary being described as a tree composed of arcs and nodes between which are defined transcriptions describing the phonetic units used by the language model of the application, **characterized in that** the Markov network required by the Viterbi decoding is at least partly dynamically constructed using Markov sub-units determined from the transcriptions of the tree.

2. A voice recognition method according to claim 1, **characterized in that** different words of the vocabulary having identical phonetic segments at the beginning thereof will share, for such identical segments, the same branches of the phonetic tree.

3. A voice recognition method according to claim 1 or 2, **characterized in that** said phonetic units are phonemes.

4. A voice recognition method according to claim 1 or 2, **characterized in that** said phonetic units are phonemes in context.

5. A voice recognition system adapted to the application of the voice recognition method according to any one of the preceding claims and including at least a memory and computation means.

## Patentansprüche

1. Verfahren zur Spracherkennung, das eine Darstellung eines in ein Markov-Modell übersetzten Vokabulars, eine Dekodierungsstufe durch einen Viterbi-Algorithmus und eine Kürzungsstufe der untersuchten Lösungen umfasst, wobei das genannte Vokabular in Form eines Baums beschrieben wird, der aus Bögen und Knoten geformt wird, zwischen denen Transkriptionen definiert sind, die die phonetischen Einheiten beschreiben, die durch das Sprachmodell der Anwendung verwendet werden, **dadurch gekennzeichnet, dass** das für die Viterbi-Dekodierung notwendige Markov-Netz dank der Markovschen Untereinheiten, die ausgehend von den Transkriptionen des Baums bestimmt werden, wenigstens zum Teil auf dynamische Weise konstruiert ist.

2. Verfahren zur Spracherkennung gemäß Anspruch 1, **dadurch gekennzeichnet, dass** vom Vokabular unterschiedliche Wörter, die jedoch zum Wortbeginn identische phonetische Segmente aufweisen, für diese identischen Segmente dieselben Zweige des phonetischen Baums teilen.

3. Verfahren zur Spracherkennung gemäß Anspruch 1 oder 2, **dadurch gekennzeichnet, dass** die genannten phonetischen Einheiten Phoneme sind.

4. Verfahren zur Spracherkennung gemäß Anspruch 1 oder 2, **dadurch gekennzeichnet, dass** die genannten phonetischen Einheiten Phoneme im Kontext sind.

5. System zur Spracherkennung, das für die Umsetzung des Verfahrens zur Spracherkennung gemäß einem der vorherigen Ansprüche angepasst ist und wenigstens einen Speicher und Berechnungsmittel umfasst.
